# EUROPÄISCHE PATENTANMELDUNG

(11) **EP 1 679 534 A1**
(43) Veröffentlichungstag der Anmeldung: **12.07.2006**
(21) Anmeldenummer: 05405703.9
(22) Anmeldetag: 16.12.2005
(51) Int. Cl.: G02B 6/44

(54) **Optisches Kommunikationskabel**

(30) Priorität: 11.01.2005 CH 282005
(71) Anmelder: Brugg Kabel AG, CH-5201 Brugg AG (CH)
(72) Erfinder: Tarantino, Daniele, 8052 Zürich (CH); Oeschger, Beat, 5272 Gansingen (CH); Hertig, Thomas, 8408 Winterthur (CH)
(74) Vertreter: Breiter, Heinz

(57) **Zusammenfassung**

Ein optisches Kommunikationskabel (18) umfasst in einer Bündelader (20) wenigstens einen Lichtwellenleiter (10) mit primärer Ummantelung (16) und einen Aussenmantel (26). Die Bündelader (20) besteht aus einem glatten flexiblen Metallrohr. Unmittelbar darauf liegt eine faserförmige metallfreie Zugentlastung. Diese direkt verlegbaren Kommunikationskabel (18) haben einen kleineren Aussendurchmesser als herkömmliche, was einen kleineren Biegeradius erlaubt. In Querrichtung sind die Lichtwellenleiter (10) hermetisch dicht gegen Feuchtigkeit geschützt.

## Beschreibung

Die Erfindung betrifft ein optisches Kommunikationskabel, welches in einer Bündelader wenigstens einen Lichtwellenleiter mit primärer Ummantelung und einen Aussenmantel umfasst, zum direkten Verlegen.

Optische Kabel mit Lichtwellenleitern, insbesondere Glasfasern, sind seit mehreren Jahrzehnten bekannt. Die Daten werden statt in Form von elektrischen Impulsen durch Metallleiter als Lichtquanten in Lichtwellenleitern, insbesondere Glasfasern, übermittelt. Schnittstellen sind elektrooptische Kupplungen, welche elektrische Impulse in Lichtquanten umwandeln und umgekehrt.

Moderne Lichtwellenleiter und optische Kommunikationskabel mit wenigstens einem Lichtwellenleiter sind beispielsweise aus der Firmenschrift "Kommunikationskabel/Communication Cables" der Firma Brugg Kabel AG, CH-5201, revidierte Ausgabe 2004, bekannt.

Ein Lichtwellenleiter bekannter Bauart umfasst einen optischen Kern und einen optischen Mantel, in der Praxis eine Glasfaser mit einem Aussendurchmesser von insgesamt 125 µm. Eine primäre Ummantelung der Glasfaser aus einem Kunststoff hat einen Aussendurchmesser von beispielsweise etwa 250 µm. Je nach Verwendung werden Kabel mit Singlemodefasern oder Multimodefasem eingesetzt, nähere Angaben sind der vorerwähnten Firmenschrift, Seiten 6 bis 9, zu entnehmen.

Im erwähnten Firmenprospekt "Kommunikationskabel/Communication Cables", Seite 25, wird ein Lichtwellenleiterkabel mit einer zentralen Bündelader aus Kunststoff angeboten, welche bis zu 24 Glasfasern mit primärer Ummantelung aufnehmen kann. Die Zwischenräume sind z. B. mit einem Gel gefüllt.

Wahlweise kann eine Zugentlastung aus Glasgarn, welches auch als Nagetierschutz dient, angeordnet sein.

Der Erfindung liegt die Aufgabe zugrunde, ein optisches Kommunikationskabel der eingangs genannten Art zu schafften, welches gegen Querfeuchte hermetisch abgeschirmte optische Leiter aufweist, eine erhöhte Querdruckbeständigkeit gewährleistet und einen kleineren Biegeradius zulässt.

Die Aufgabe wird erfindungsgemäss dadurch gelöst, dass die Bündelader aus einem glatten flexiblen Metallrohr besteht. Vorteilhafte und weiterbildende Ausführungsformen des optischen Kommunikationskabels sind Gegenstand von abhängigen Patentansprüchen.

Die Bündelader besteht vorzugsweise aus Stahl, beispielsweise einem Edelstahl, Aluminium oder einer Aluminiumlegierung, Kupfer oder Messing. Bei einem Aussendurchmesser von zweckmässig 2 bis 4 mm liegt die Wandstärke des Bündelrohrs bevorzugt bei 0,1 bis 0,5 mm, insbesondere bei etwa 0,2 mm.

Je nach dem Metall der Bündeladern und dessen Beschaffenheit liegt der minimale Biegeradius des Kabels vorzugsweise beim 10 bis 30-fachen Aussendurchmesser, insbesondere beim 15 bis 20-fachen Aussendurchmesser. Dies hat zur Folge, dass der Biegeradius des erfindungsgemässen Kabels, wesentlich unterhalb dem Biegeradius eines herkömmlichen Kabels mit einem wesentlich grösseren Aussendurchmesser liegt, z.B. einem Kabel mit einem Stahlrillmantel.

Die Lichtwellenleiter liegen mit Zwischenräumen frei in der Bündelader, wobei diese Zwischenräume vorzugsweise mit einer Aderfüllmasse hoher Viskosität, vorzugsweise mit einem Gel, gefüllt sind.

Die erfindungsgemässe flexible Bündelader aus einem Metall kann durch eine zwischen diesem und dem Aussenmantel angeordnete garn- oder faserförmige Zugentlastung entlastet werden. Die Zugentlastung besteht in der Praxis aus Glas-, Keramik-, Kohle- oder Aramidfasern. Aramide sind eine Gattungsbezeichnung für aromatische Polyamide aus aromatischen Diaminen und Arylendicarbonsäuren. Bekannt sind beispielsweise thermisch beständige, hochfeste Aramidfasern mit niedriger Dehnung der Firma Dupont, welche unter der Marke Kevlar vertrieben werden. Durch Anbringen einer Zugentlastung kann die maximale Zugkraft um einen Faktor von etwa 10 erhöht werden, beispielsweise von 300 N auf 3000 N.

Nach einer weiterentwickelten Ausführungsform der Erfindung wird um die metallische Bündelader ein Quellband angeordnet. Dieses kann jedoch auch zwischen zwei koaxialen Lagen von faserförmigen Zugentlastungen angeordnet sein. Falls Feuchtigkeit in das Kabel eindringt, vergrössert sich das Volumen des Quellbandes und verhindert durch den Anpressdruck einen Wasserdurchtritt in Längsrichtung.

In an sich bekannter Weise kann innenseitig des Aussenmantels oder im Aussenmantel selbst eine Feuchtigkeitssperre eingebaut sein, vorzugsweise eine Aluminiumfolie oder ein Kunststoff-Aluminiumlaminat.

Für das erfindungsgemässe optische Kommunikationskabel ergeben sich zusammengefasst folgende Vorteile:
- Sie können praktisch immer direkt verlegt werden, beispielsweise unter Wasser, insbesondere in offenen Gewässern und in Abwasserkanälen von Siedlungen, Gewerbe und Industrie, im Erdreich, insbesondere entlang von Strassen oder Schienen, in Rohranlagen und Kabelkanälen in Gebäuden.
- Eine Bündelader aus einem Metallrohr gewährleistet einen hermetischen Feuchtigkeitsschutz der optischen Leiter, insbesondere auch in Querrichtung.
- Ein glattes flexibles Metallrohr als Bündelader erlaubt dank des kleineren Aussendurchmessers einen gegenüber einem Kabel mit einem Stahlrillmantel verkleinerten Biegeradius.
- Die Querdruckbeständigkeit und auch die hydrostatische Druckbeständigkeit werden erhöht.
- Ein Dauerbetrieb kann in einem Temperaturbereich von -40 bis +80 °C aufrechterhalten werden, ohne dass eine Beeinträchtigung der Signalübertragung erfolgt.
- Trotz des kleinen Durchmessers können z. B. bis 48 Glasfasern mit primärer Ummantelung aufgenommen werden, wobei die Zwischenräume zweckmässig mit einer Aderfüllmasse gefüllt sind, beispielsweise mit einem Gel.
- Trotz der Bündelader aus einem Metallrohr können Zugentlastungen ihre Wirkung voll entfalten, die Bündelader ist nicht oder minim zugbelastet.
- Die Bündelader aus einem Metallrohr ist ein absoluter Nagerschutz.

Die Erfindung wird anhand von in der Zeichnung dargestellten Ausführungsbeispielen, welche auch Gegenstand von abhängigen Patentansprüchen sind, näher erläutert. Es zeigen schematisch:
- - Fig. 1: eine perspektivische Ansicht eines stirnseitigen Endes eines Lichtwellenleiters,
- - Fig. 2: einen Querschnitt durch ein optisches Kommunikationskabel mit einer Zugentlastung,
- - Fig.3: ein optisches Kommunikationskabel gemäss Fig. 2 mit einer Feuchtigkeitssperre, und
- - Fig. 4: ein optisches Kommunikationskabel gemäss Fig. 2 mit einem Quellband.

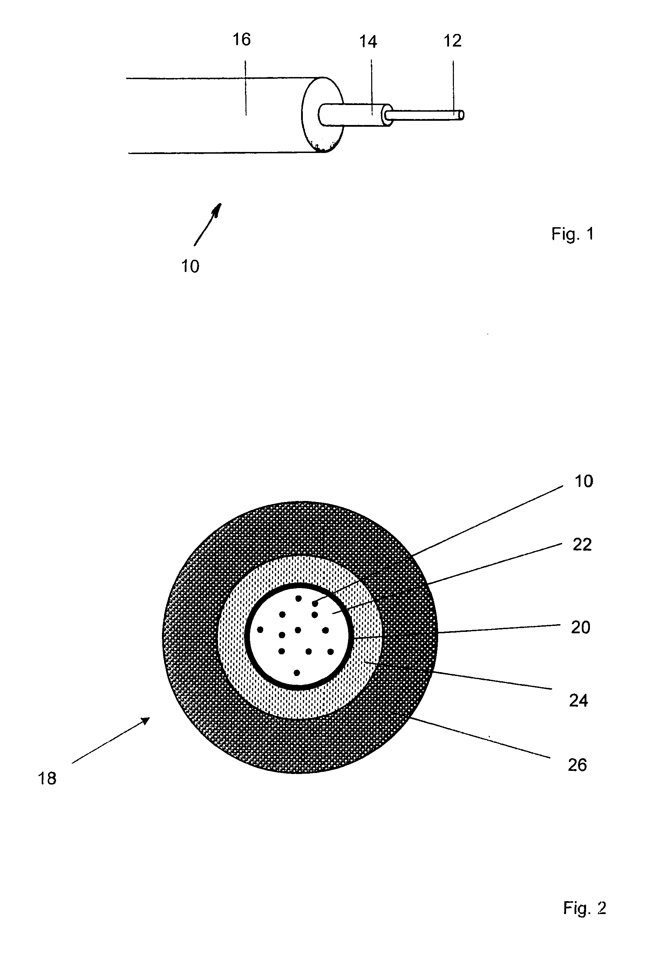

Fig 1 zeigt einen Lichtwellenleiter 10 mit einem optischen Kern 12 und einem optischen Mantel 14 aus Glas und einer Primärummantelung 16 aus Kunststoff. Der optische Kern 12 und der optische Mantel 14 werden, entsprechend ihrem üblichen Material, auch einfachheitshalber als Glasfaser bezeichnet. Es wird zwischen Singlemode-Fasern und Multimode-Fasern unterschieden, was einfachheitshalber in Fig. 1 nicht erkennbar ist.

Fig. 2 zeigt ein optisches Kommunikationskabel 18 mit in einer Bündelader 20 aus Edelstahl, zwölf längslaufende Lichtwellenleiter 10 gemäss Fig. 1. Die Bündelader 20 ist mit einer Aderfüllmasse 22 gefüllt, vorliegend mit einem Gel.

Die Bündelader 20 ist von einer Lage faserförmiger Zugentlastung 24 umgeben, vorliegend aus Glasgarn. Ein Aussenmantel 26 aus einem thermoplastischen Kunststoff, z.B. aus PE, PP, PUR, PA oder FRNC dient dem mechanischen und chemischen Schutz. Die Oberfläche ist gut bedruckbar.

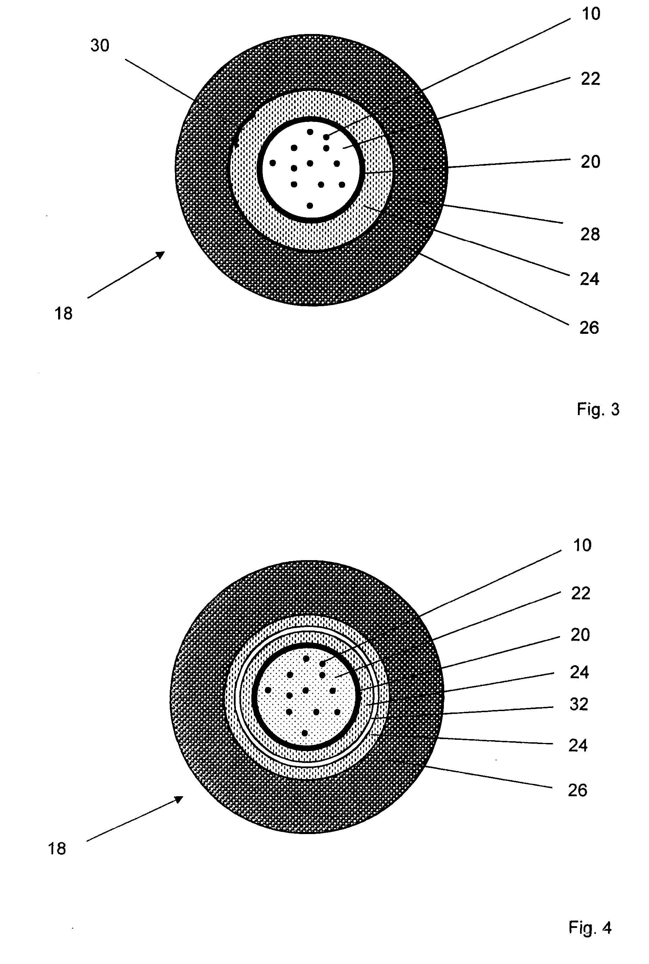

In der Ausführungsform gemäss Fig. 3 ist zwischen der Innenfläche des Aussenmantels 26 und der Oberfläche der Bündelader 20 eine Feuchtigkeitssperre 28 aus einer laminierten Aluminiumfolie aufgebracht, welche eine längslaufende Überlappung 30 aufweist.

In der Ausführungsform gemäss Fig. 4 verläuft ein Quellband 32 in der Zugentlastung 24, welches diese in eine innere und eine etwa gleich dicke äussere Lage von Fasern aufteilt. Das Quellband 32 verläuft weitgehend koaxial zu der metallischen Bündelader 20 und dem Aussenmantel 26. Beim Eindringen von Feuchtigkeit quillt das Quellband 32 auf und übt auf alle Schichten einen Druck aus, welcher das Vordringen der Feuchtigkeit in Längsrichtung verhindert oder zumindest stark einschränkt.

## Patentansprüche

1. Optisches Kommunikationskabel (18), welches in einer Bündelader (20) aus einem glatten flexiblen Metallrohr wenigstens einen Lichtwellenleiter (10) mit primärer Ummantelung (16) und einen Aussenmantel (26) umfasst,
**dadurch gekennzeichnet, dass**
unmittelbar auf der Bündelader (20) aufliegend eine faserförmige metallfreie Zugentlastung (24) angeordnet ist.

2. Optisches Kommunikationskabel (18) nach Anspruch 1, **dadurch gekennzeichnet, dass** die Zugentlastung aus Glas-, Keramik-, Kohle- oder Aramidfasern oder -garnen besteht.

3. Optisches Kommunikationskabel (18) nach Anspruch 1 oder 2, **dadurch gekennzeichnet, dass** die Bündelader (20) aus Edelstahl, Aluminium, Kupfer oder Messing besteht.

4. Optisches Kommunikationskabel (18) nach einem der Ansprüche 1 bis 3, **dadurch gekennzeichnet, dass** die Wandstärke der Bündelader (20) bei einem Aussendurchmesser von vorzugsweise 2 bis 4 mm im Bereich von 0,1 bis 0,5 mm liegt.

5. Optisches Kommunikationskabel (18) nach einem der Ansprüche 1 bis 4, **dadurch gekennzeichnet, dass** der minimale Biegeradius des Kabels beim 10 bis 30-fachen von dessen Aussendurchmesser, vorzugsweise beim 15 bis 20-fachen von dessen Aussendurchmesser liegt.

6. Optisches Kommunikationskabel (18) nach einem der Ansprüche 1 bis 7, **dadurch gekennzeichnet, dass** die Bündelader (20) mit einer Aderfüllmasse (22), vorzugsweise einem Gel, gefüllt ist.

7. Optisches Kommunikationskabel (18) nach einem der Ansprüche 1 bis 6, **dadurch gekennzeichnet, dass** zwischen der Bündelader (20) und dem Aussenmantel (26) ein Quellband (32) angeordnet ist.

8. Optisches Kommunikationskabel (18) nach Anspruch 7, **dadurch gekennzeichnet, dass** das Quellband (32) zwischen zwei etwa gleich dicken Lagen der Zugentlastung (24) angeordnet ist.

9. Optisches Kommunikationskabel (18) nach einem der Ansprüche 1 bis 8, **dadurch gekennzeichnet, dass** ausserhalb der Zugentlastung (24) eine Feuchtigkeitssperre (28), vorzugsweise eine Aluminiumfolie oder ein Aluminium-Kunststofflaminat, angeordnet ist.
